# EUROPEAN PATENT APPLICATION

(11) **EP 4 302 940 A1**
(43) Date of publication of application: **10.01.2024**
(21) Application number: 22763106.6
(22) Date of filing: 24.02.2022
(51) Int. Cl.: B25J 17/00

(54) **COUPLING DEVICE AND ROBOT**

(30) Priority: 03.03.2021 JP 2021033239
(71) Applicant: Sumitomo Heavy Industries, Ltd., Tokyo 141-6025 (JP)
(72) Inventor: HIRATA, Masaki, Yokosuka-shi, Kanagawa 237-8555 (JP)
(74) Representative: Louis Pöhlau Lohrentz
(86) International application number: PCT/JP2022/007676
(87) International publication number: WO 2022/186050

(57) **Abstract**

A coupling device 30 that couples a first link 41 and a second link 42 so as to be relatively rotatable includes: a casing 31 including a first attachment portion 311 to which the first link 41 is attached and a second attachment portion 312 to which the second link 42 is attached, a motor 33 that is housed inside the casing 31 and generates power for relative rotation of the first link 41 and the second link 42, an elastic member 37 provided on an outer periphery of the casing 31 and elastically deformable by rotation of the first link 41 with respect to the casing 31, and a control board 32 that detects a torque that causes the rotation based on elastic deformation of the elastic member 37.

## Description

### Technical Field

The present invention relates to a coupling device that couples a plurality of members so as to be relatively movable, and a robot in which the coupling device is used.

### Background Art

Industrial robots that perform various works in place of humans have been introduced at industrial sites such as factories, distribution warehouses, construction sites, and hospitals. Many of the industrial robots in the related art are large and have high output, and for safety, it is necessary to provide an isolated space that humans cannot enter to perform a work. On the other hand, in recent years, the introduction of cooperative robots that work together in the same space as humans has been progressing. The cooperative robot that is smaller than the industrial robot in the related art can be installed in a narrow space and has a low output, so that a large-scale system for ensuring safety is not required.

### Citation List

### Patent Literature

[PTL 1] Japanese Unexamined Patent Publication No. 2017-26150

### Summary of Invention

### Technical Problem

PTL 1 discloses a technique for providing an elastic element or a spring element having a curved shape inside a joint component of an industrial robot. Even when a person who works together in the same space collides with the industrial robot, the elastic element inside the joint component is elastically deformed to absorb the impact, and thus the safety is improved. On the other hand, since the elastic element needs to be incorporated together with other components inside the joint component, there are many restrictions on a shape, a size, a layout, or the like, and it is difficult to replace it once it is incorporated inside the joint component.

The present invention has been made in view of such a situation, and an object of the present invention is to provide a coupling device to which an elastic member can be easily provided.

### Solution to Problem

In order to solve the above-described problems, a coupling device according to an aspect of the present invention is a coupling device that couples a first member and a second member so as to be relatively movable, and includes a casing including a first attachment portion to which the first member is attached and a second attachment portion to which the second member is attached, an actuator that is housed inside the casing and generates power for relative motion of the first member and the second member, an elastic member provided on an outer periphery of the casing and elastically deformable by rotation of the first member with respect to the casing, and a torque detection unit that detects a torque that causes the rotation based on elastic deformation of the elastic member.

Another aspect of the present invention is a robot. The robot includes a first link, a second link, and a coupling device that couples the first link and the second link so as to be relatively rotatable. The coupling device includes a casing including a first attachment portion to which the first link is attached and a second attachment portion to which the second link is attached, an actuator that is housed inside the casing and generates power for relative rotation of the first link and the second link, an elastic member provided on an outer periphery of the casing and elastically deformable by rotation of the first link with respect to the casing, and a torque detection unit that detects a torque that causes the rotation based on elastic deformation of the elastic member.

In addition, any combination of the above-described components and a conversion of the expression of the present invention between methods, devices, systems, recording media, computer programs, and the like are also effective as aspects of the present invention.

### Advantageous Effects of Invention

According to the present invention, the elastic member can be easily provided in the coupling device or the robot.

### Brief Description of Drawings

Fig. 1 is a perspective diagram illustrating an appearance of a robot arm.
Fig. 2 is a diagram schematically illustrating a configuration of a coupling device that can be used for each joint of the robot arm.
Figs. 3A and 3B are diagrams schematically illustrating a principle of torque detection based on elastic deformation of an elastic member.
Fig. 4 is a diagram illustrating a first modification of the coupling device.
Fig. 5 is a diagram illustrating a second modification of the coupling device.
Fig. 6 is a diagram illustrating a third modification of the coupling device.
Fig. 7 is a diagram illustrating a fourth modification of the coupling device.

### Description of Embodiments

Hereinafter, an embodiment for carrying out the present invention will be described in detail with reference to the drawings. In the description and drawings, the same or equivalent components, members, and processes will be given the same reference signs, and redundant description thereof will be omitted as appropriate. The scales or shapes of illustrated constituents are set for convenience in order to make the description easy to be understood, and are not to be understood as limiting unless stated otherwise. The embodiment is an example and does not limit the scope of the present invention in any way. All the features and combinations thereof described in the embodiment are not necessarily essential to the invention.

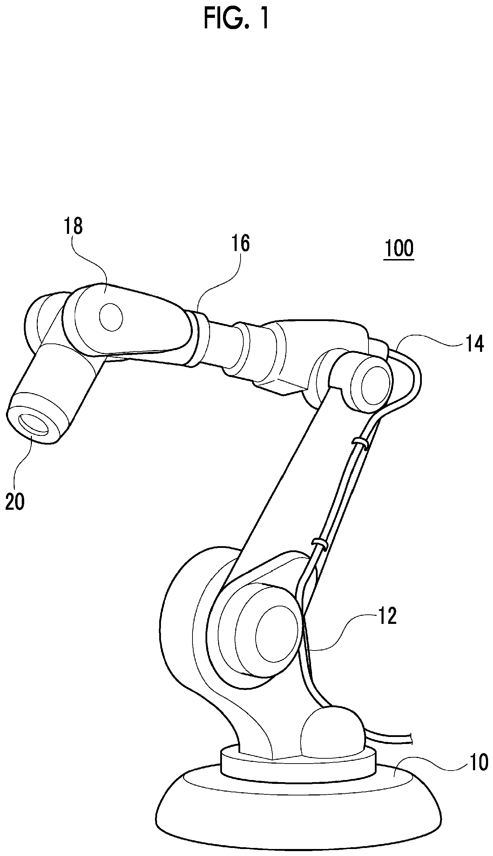

Fig. 1 is a perspective diagram illustrating an appearance of a robot arm 100 as an example of an industrial robot or a cooperative robot. The robot arm 100 is a vertical articulated type robot arm using a serial link mechanism. The robot to which the present invention is applied is not limited to a robot arm, and may be any robot having a joint (corresponding to a joint in a human body) coupling a plurality of links (corresponding to bones in the human body). A parallel link mechanism may be used instead of the serial link mechanism, or a horizontal articulated type may be used instead of the vertical articulated type.

The robot arm 100 has six shafts or joints of a first shaft 10, a second shaft 12, a third shaft 14, a fourth shaft 16, a fifth shaft 18, and a sixth shaft 20, in order from the one closest to a pedestal. Each shaft corresponds to each joint of the human body, the first shaft 10 corresponds to a waist, the second shaft 12 corresponds to a shoulder, the third shaft 14 corresponds to an elbow, the fourth shaft 16 corresponds to a wrist (rotation), the fifth shaft 18 corresponds to a wrist (bending), and the sixth shaft 20 corresponds to a fingertip (rotation). The direction of each shaft can be appropriately designed according to a purpose and an application of the robot arm 100. However, in the present embodiment, assuming that the pedestal is placed on a horizontal plane, the first shaft 10 is oriented in a vertical direction (perpendicular to the pedestal, which is a horizontal plane), the second shaft 12 and the third shaft 14 are oriented in a horizontal direction (parallel to the pedestal, which is a horizontal plane), the fourth shaft 16 is oriented in a direction perpendicular to the third shaft 14, the fifth shaft 18 is oriented in a horizontal direction, and the sixth shaft 20 is oriented in a direction perpendicular to the fifth shaft 18.

A tip device having a shape and a function according to a work purpose is attached to the sixth shaft 20 which is a tip part of the robot arm 100. For example, various types of tip devices are available, such as a grapple shape for grasping an object, a shovel shape for scooping an object, a fork shape for supporting an object from below and transporting the object, a hook shape for hooking an object and transporting the object, and a crane shape for lifting an object and transporting the object.

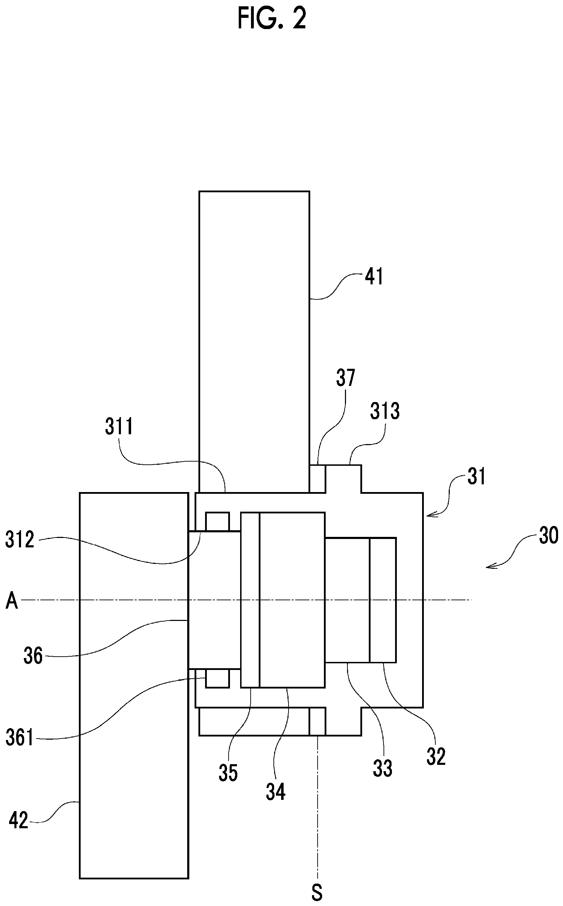

Fig. 2 schematically illustrates a configuration of a coupling device 30 that can be used for each joint of the robot arm 100. The coupling device 30 couples a first link 41 as the first member and a second link 42 as the second member so as to be relatively movable. The coupling device 30 corresponds to a joint in the human body, and the first link 41 and the second link 42 coupled to each other by the coupling device 30 correspond to bones in the human body.

The first link 41 and the second link 42 perform relative motions in various modes depending on a coupling mode of the coupling device 30. In the present embodiment, an example in which the first link 41 and the second link 42 rotate relative to each other about a rotary axis A perpendicular to an extending direction of the first link 41 and the second link 42 will be described. The coupling device 30 according to this example can be applied to shafts that perform a "bending" operation, such as the second shaft 12, the third shaft 14, and the fifth shaft 18 in Fig. 1.

The relative motion of the first link 41 and the second link 42 is not limited to the rotating motion and may be a translational motion. For example, the first link 41 and the second link 42 may be configured to perform a translational motion relative to each other in a direction (a direction perpendicular to a paper surface of Fig. 2) perpendicular to the extending direction of the first link 41 and the second link, and the first link 41 and the second link 42 may be configured to perform a translational motion relative to each other in a direction (vertical direction in Fig. 2) parallel to the extending direction of the first link 41 and the second link.

The coupling device 30 includes a casing 31, a control board 32, a motor 33, a speed reducer 34, an output shaft encoder 35, and an output flange 36. The casing 31 has a rotation-symmetrical shape around the rotary axis A, and houses the components 32 to 36 of the coupling device 30 inside the casing 31. On the outer periphery of the casing 31, a first attachment portion 311 to which the first link 41 is attached, a second attachment portion 312 to which the second link 42 is attached, and a flange portion 313 protruding in a radial direction separated from the rotary axis A are provided.

The first attachment portion 311 is a portion on an outer peripheral surface of the casing 31 where the first link 41 comes into contact with or comes close at a minute interval of about 1 mm. The first link 41 and the first attachment portion 311 are not fixed to each other, and an elastic member 37, which will be described later, fixes the first link 41 to the casing 31 (flange portion 313). Since the elastic member 37 is elastically deformable, the elastic member 37 is configured to allow relative rotation of about 5 to 10 degrees around the rotary axis A between the first link 41 and the casing 31. When the coupling device 30 is applied to a cooperative robot, even when a person working together collides with the cooperative robot, an impact is absorbed by the elastic deformation of the elastic member 37 (rotation of the first link 41 with respect to the casing 31), improving safety.

The second attachment portion 312 is an opening portion on a bottom surface side (left side in Fig. 2) coupled to an internal space of the casing 31 housing the components 32 to 36. The second link 42 is attached to the casing 31 via an output flange 36 provided in the opening portion. The flange portion 313 is provided at a position separated from the first attachment portion 311 along a direction of the rotary axis A. The elastic member 37 is interposed between the first link 41 attached to the first attachment portion 311 and the flange portion 313 to fix both of them.

The control board 32 is responsible for controlling the entire coupling device 30. For example, control board 32 performs generation of a drive command to the motor 33, change of a reduction ratio of the speed reducer 34, adaptive control based on measurement data of the output shaft encoder 35, detection of a torque based on elastic deformation of the elastic member 37, adaptive control based on the detected torque, and the like. The motor 33 is an actuator that generates power for rotationally driving the second link 42 around the rotary axis A in response to the drive command from the control board 32. The speed reducer 34 reduces a rotation speed of the motor 33 by means of gears or the like, and generates a torque proportional to the reduction ratio thereof. The reduction ratio of the speed reducer 34 can be changed by the control board 32, and a torque suitable for the work performed by the robot arm 100 can be generated.

The output shaft encoder 35 is a rotary encoder that measures a rotation position around the rotary axis A with respect to the casing 31 of the second link 42. Here, in a case where the elastic member 37 fixing the casing 31 and the first link 41 is not elastically deformed, that is, in a case where there is no relative rotation between the casing 31 and the first link 41, the output of the output shaft encoder 35 represents a relative rotation angle of the first link 41 and the second link 42 around the rotary axis A. The output flange 36 transmits the torque generated by the speed reducer 34 to the second link 42, and causes the second link 42 to rotate around the rotary axis A. A bearing 361 that facilitates the rotation of the second link 42 with respect to the casing 31 is provided around the output flange 36.

The elastic member 37 is formed of an elastic material such as rubber that is elastically deformable, and surrounds an outer periphery of the casing 31 in an annular shape. Specifically, the elastic member 37 enters an annular gap between the flange portion 313 of the casing 31 and the first link 41 attached to the first attachment portion 311, and the casing 31 and the first link 41 are rotatably coupled around the rotary axis A. The rotation of the first link 41 with respect to the casing 31 around the rotary axis A is caused by an external force. Since a torque due to the external force appears as the elastic deformation of the elastic member 37 in a circumferential direction, the torque due to the external force can be detected based on an amount of elastic deformation of the elastic member 37 in the circumferential direction. In addition, in order to measure the amount of elastic deformation of the elastic member 37, various displacement sensors such as a magnetic strain sensor, a strain gauge, a piezoelectric element, a polarizing element, and a capacitance sensor may be attached to the surface of the elastic member 37 or the like. The amount of elastic deformation measured by the displacement sensor is converted into a torque by an arithmetic device or the like mounted on the control board 32. In this way, the function of the torque detection unit is realized by the displacement sensor and the control board 32.

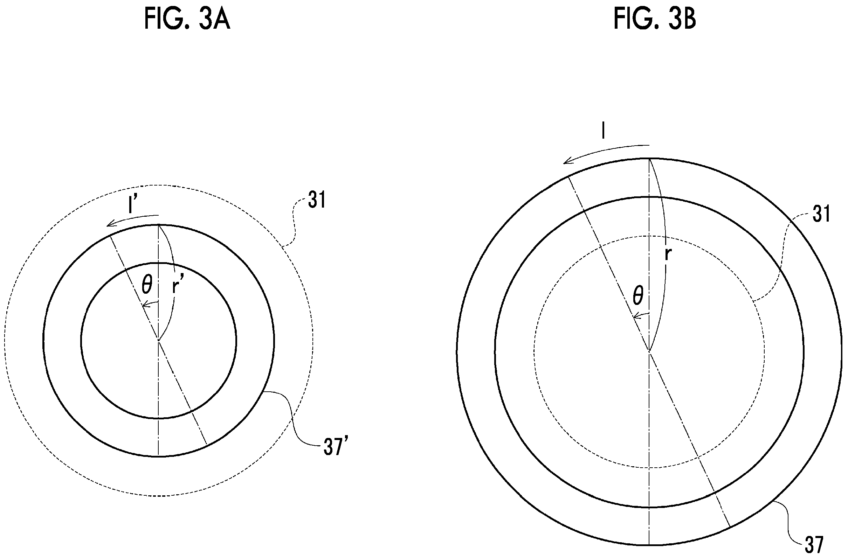

Figs. 3A and 3B schematically illustrate a principle of torque detection based on elastic deformation of the elastic member 37. This figure illustrates a cross section S including the elastic member 37 in Fig. 2, and illustrates only the elastic member 37 (solid line) and the casing 31 (dotted line). Fig. 3A illustrates a comparative example in which an elastic member 37 'is provided inside the casing 31, and Fig. 3B illustrates the present embodiment in which the elastic member 37 is provided outside the casing 31. The size of the annular casing 31 is the same in Figs. 3A and 3B.

In both Figs. 3A and 3B, the elastic member is elastically deformed by the external force, and rotation at a same rotation angle θ occurs in the circumferential direction and a counterclockwise direction. The displacement in the outer periphery of the elastic member is l' = r'θ in Fig. 3A and 1 = rθ in Fig. 3B. Since an outer diameter of the elastic member is larger in Fig. 3B, (r' < r), l' < l. Here, since the displacement of the elastic member has a positive correlation with the torque due to the external force that causes the displacement, when the torques in each figure are τ' and τ, then τ' < τ. As described above, in a case where the elastic deformation having the same rotation angle θ occurs, a larger torque can be detected in Fig. 3B. On the contrary, when the same torque is applied, the rotation angle θ due to the elastic deformation becomes smaller in Fig. 3B.

When the above relationship is expressed by a torsional stiffness K = τ / θ, it can be said that the present embodiment of Fig. 3B has a higher torsional stiffness K than the comparative example of Fig. 3A. As described above, according to the present embodiment in which the large-diameter elastic member 37 is provided outside the casing 31, compared to the comparative example in which a small-diameter elastic member 37' is provided inside the casing 31, the stiffness of the elastic member 37 configuring a torque sensor can be increased while maintaining an accuracy of the torque sensor. Therefore, when a strong external force is applied, the risk of damage to the elastic member 37 can be reduced, and the life of the elastic member 37 can be extended. In addition, since the elastic member 37 is provided outside the casing 31, even when replacement is necessary, the elastic member 37 can be easily replaced as compared with the comparative example. Further, in a case where the elastic member 37 is provided outside the casing 31, compared to the inside of the casing 31 in which the other components 32 to 36 are housed, there are fewer restrictions on a shape, a size, and a layout, so the configuration can be simplified and installation can be facilitated.

Data of the rotation angle θ generated by the elastic deformation of the elastic member 37 and the detected torque τ are used in the control board 32 for the adaptive control based on the data. Since the rotation angle θ represents the rotation of the first link 41 with respect to the casing 31 around the rotary axis A, by combining the measurement data of the output shaft encoder 35 representing the rotation of the second link 42 with respect to the casing 31 around the rotary axis A, the control board 32 can detect an accurate relative rotation angle between the first link 41 and the second link 42. In addition, the control board 32 that functions as the torque detection unit can detect the torque τ due to the external force based on the rotation angle θ. In this way, the control board 32 autonomously generates a drive command for the motor 33 to cause the first link 41 and the second link 42 to perform desired operations, taking into consideration the relative rotation angle between the first link 41 and the second link 42 and the torque due to external force.

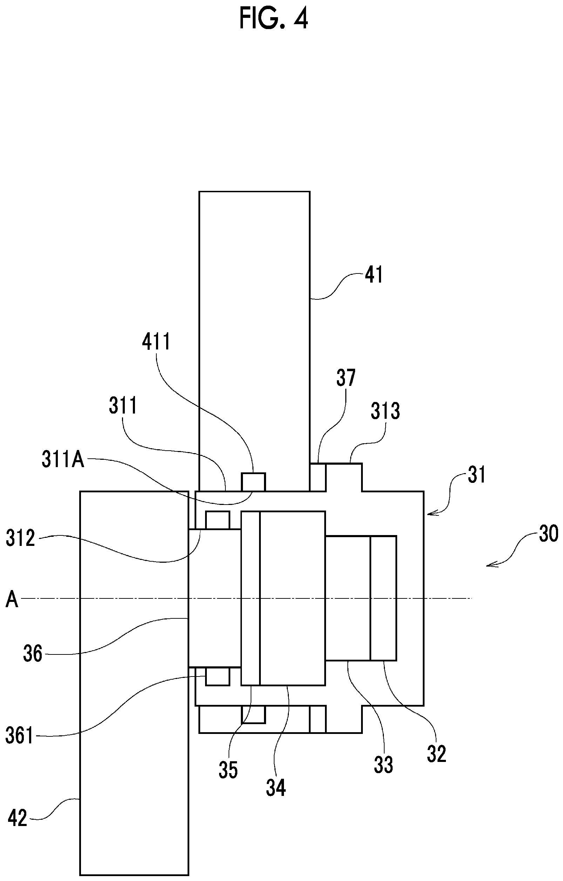

In a first modification illustrated in Fig. 4, a bearing 411 is provided at a contact portion between the first attachment portion 311 and the first link 41. The bearing 411 that supports the first link 41 that rotates with respect to the casing 31 is attached to a bearing attachment portion 311A in the first attachment portion 311. Since the bearing 411 facilitates the rotation of the first link 41 with respect to the casing 31 around the rotary axis A, the accuracy of the elastic deformation of the elastic member 37 in response to the torque due to the external force, that is, the accuracy of the torque sensor is improved.

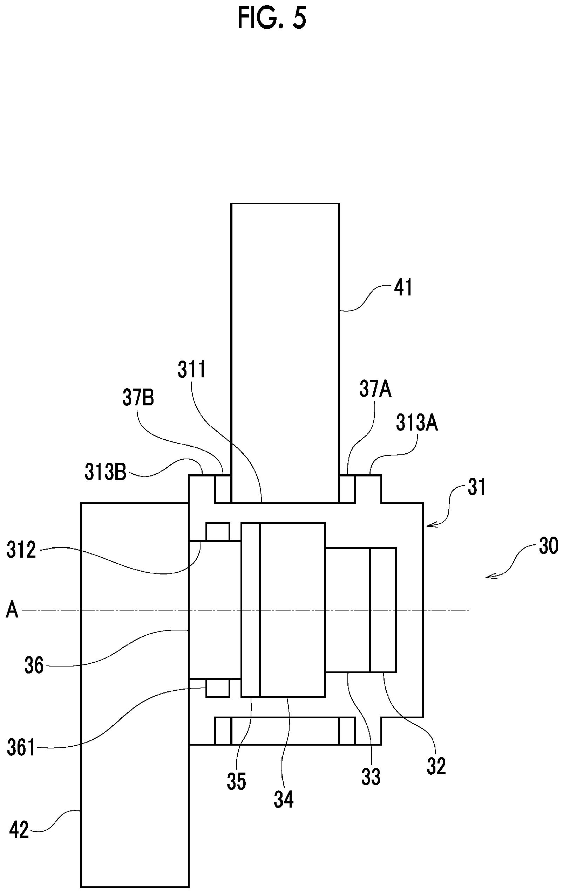

In a second modification illustrated in Fig. 5, flange portions for attaching the elastic member are provided on both sides of the first attachment portion 311. A first flange portion 313A is provided at a position (a position to the right of the first attachment portion 311 in Fig. 5) separated from the second link 42 along the rotary axis A with the first attachment portion 311 as a reference. A second flange portion 313B is provided at a position (a position to the left of the first attachment portion 311 in Fig. 5) approaching the second link 42 along the rotary axis A with the first attachment portion 311 as a reference.

A first elastic member 37A is interposed between the first link 41 attached to the first attachment portion 311 and the first flange portion 313A to fix both of them. A second elastic member 37B is interposed between the first link 41 attached to the first attachment portion 311 and the second flange portion 313B to fix both of them. Here, the first elastic member 37A and the second elastic member 37B are formed of an elastic material such as rubber that is elastically deformable, similarly to the above-described elastic member 37, and surround the outer periphery of the casing 31 in an annular shape. In a configuration in which the first link 41 is sandwiched between the two elastic members 37A and 37B, since the accuracy of rotation of the first link 41 with respect to the casing 31 around the rotary axis A is improved, the same effect as that of the bearing 411 in the first modification can be obtained. In addition, since the torque sensor can be duplicated by the two elastic members 37A and 37B, the reliability of the coupling device 30 is improved.

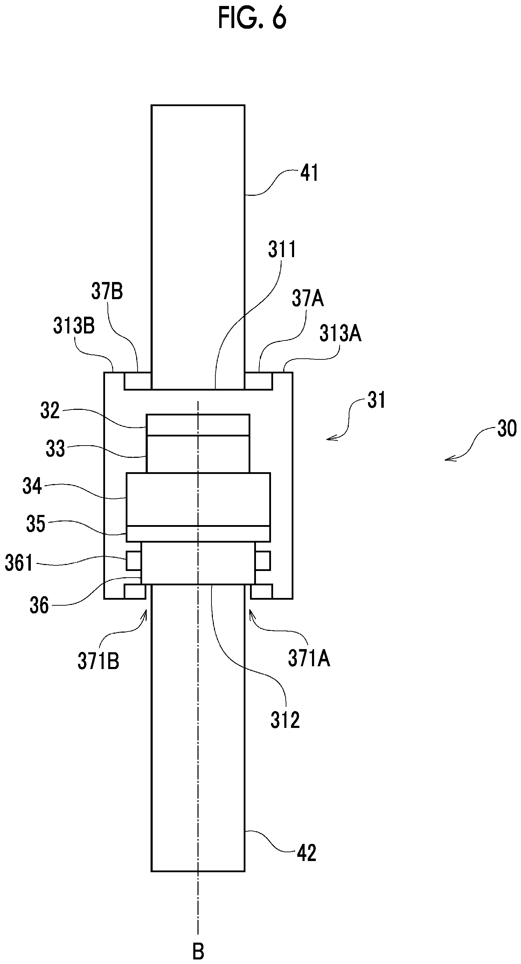

In a third modification illustrated in Fig. 6, the first link 41 and the second link 42 rotate relative to each other about a rotary axis B parallel to the respective extending directions. The coupling device 30 according to this example can be applied to a shaft that performs a "rotating" or "twisting" operation of the first shaft 10, the fourth shaft 16, the sixth shaft 20, or the like in Fig. 1. Similar to the second modification in Fig. 5, the flange portions 313A and 313B for attaching the elastic member are provided so as to sandwich the first attachment portion 311, but these flange portions 313A and 313B also sandwich the second attachment portion 312.

The annular first elastic member 37A is attached to an annular gap formed by the first flange portion 313A between the first link 41 and the second link 42, and the annular second elastic member 37B is attached to an annular gap formed by the second flange portion 313B between the first link 41 and the second link 42. Here, the first elastic member 37A fixes the first link 41 and the first flange portion 313A so as to be elastically deformable in the circumferential direction. On the other hand, the first elastic member 37A does not come into contact with the second link 42 due to a first notch 371A provided on the second link 42 side. Similarly, the second elastic member 37B fixes the first link 41 and the second flange portion 313B so as to be elastically deformable in the circumferential direction. On the other hand, the second elastic member 37B does not come into contact with the second link 42 due to a second notch 371B provided on the second link 42 side.

With the above configuration, the elastic members 37A and 37B configure a torque sensor that detects a torque by rotation (rotation with the left-right direction in Fig. 6 as a rotary axis) of the first link 41 with respect to the casing 31, and do not inhibit the rotation of the second link 42 by the motor 33 around the rotary axis B. In addition, the same effect can be obtained by forming the elastic members 37A and 37B into an arc shape (for example, a semicircular shape) that covers only the first link 41 side instead of forming the elastic members 37A and 37B in an annular shape.

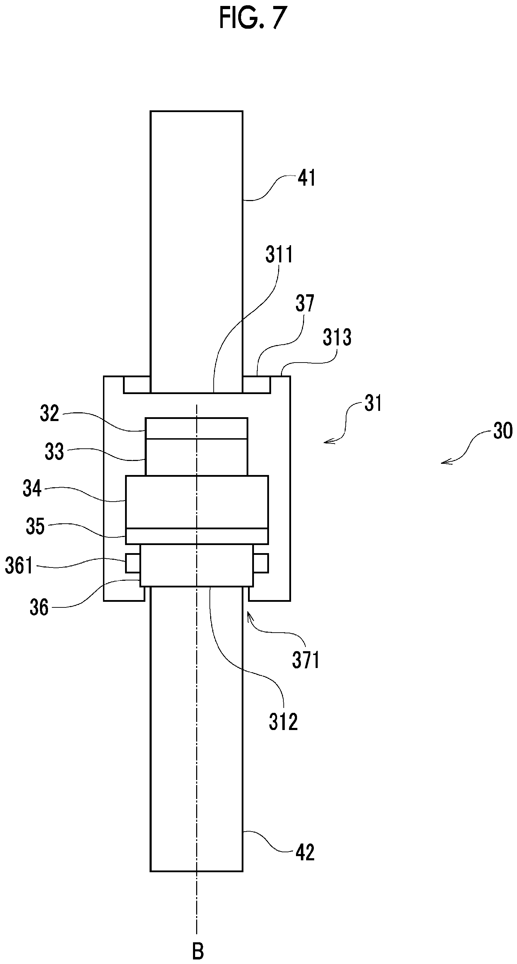

In a fourth modification illustrated in Fig. 7, instead of the two elastic members 37A and 37B in the third modification of Fig. 6, one elastic member 37 is provided so as to surround the outer periphery of the first link 41 in an annular shape. The elastic member 37 configures a torque sensor that detects a torque by the rotation of the first link 41 with respect to the casing 31 around the rotary axis B. In addition, the notch 371 is provided on the second link 42 side of the casing 31 as in the third modification of Fig. 6, so that the casing 31 does not inhibit the rotation of the second link 42 by the motor 33 around the rotary axis B.

The present invention has been described above based on the embodiment. The embodiment is an example, and it is understood by those skilled in the art that various modifications are possible for each of the components and combinations of each treatment process, and that such modifications are also within the scope of the present invention.

In the embodiment, the elastic members 37, 37A, and 37B provided outside the casing 31 are exposed on the surface of the casing 31, but a detachable cover that covers the elastic members 37, 37A, and 37B may be attached to the casing 31 to protect it. Since the cover can prevent damage or deterioration of the elastic members 37, 37A, and 37B, the life of the torque sensor can be extended. In addition, the elastic members 37, 37A, and 37B can be easily replaced by removing the cover.

In addition, the functional configuration of each device described in the embodiment can be realized by a hardware resource or a software resource, or by the cooperation of the hardware resource and the software resource. A processor, ROM, RAM, or other LSI can be used as the hardware resource. Programs such as operating systems and applications can be used as the software resources.

### Industrial Applicability

The present invention relates to a coupling device that couples a plurality of members so as to be relatively movable, and a robot in which the coupling device is used.

### Reference Signs List

30 Coupling device
31 Casing
32 Control board
33 Motor
34 Speed reducer
35 Output shaft encoder
36 Output flange
37 Elastic member
41 First link
42 Second link
100 Robot arm
311 First attachment portion
311A Bearing attachment portion
312 Second attachment portion
313 Flange portion
411 Bearing

## Claims

1. A coupling device that couples a first member and a second member so as to be relatively movable, the device comprising:
a casing including a first attachment portion to which the first member is attached and a second attachment portion to which the second member is attached;
an actuator that is housed inside the casing and generates power for relative motion of the first member and the second member;
an elastic member provided on an outer periphery of the casing and elastically deformable by rotation of the first member with respect to the casing; and
a torque detection unit that detects a torque that causes the rotation based on elastic deformation of the elastic member.

2. The coupling device according to claim 1, wherein
the casing includes a flange portion that protrudes from the outer periphery of the casing, and
the elastic member is provided between the first attachment portion and the flange portion.

3. The coupling device according to claim 2, wherein
the flange portion includes a first flange portion and a second flange portion provided on both sides of the first attachment portion, and
the elastic member includes a first elastic member provided between the first attachment portion and the first flange portion, and a second elastic member provided between the first attachment portion and the second flange portion.

4. The coupling device according to any one of claims 1 to 3, wherein
the first attachment portion includes
a bearing attachment portion which is provided on the outer periphery of the casing and to which a bearing that supports the first member that rotates with respect to the casing is attached.

5. A robot comprising:
a first link;
a second link; and
a coupling device that couples the first link and the second link so as to be relatively rotatable, wherein
the coupling device includes
a casing including a first attachment portion to which the first link is attached and a second attachment portion to which the second link is attached,
an actuator that is housed inside the casing and generates power for relative rotation of the first link and the second link,
an elastic member provided on an outer periphery of the casing and elastically deformable by rotation of the first link with respect to the casing, and
a torque detection unit that detects a torque that causes the rotation based on elastic deformation of the elastic member.
